# EUROPEAN PATENT APPLICATION

(11) **EP 4 661 545 A1**
(43) Date of publication of application: **10.12.2025**
(21) Application number: 24749590.6
(22) Date of filing: 25.01.2024
(51) Int. Cl.: H04W 72/0457

(54) **DCI SIZE DETERMINATION METHOD, DCI SENDING METHOD, APPARATUS, AND RELATED DEVICE**

(30) Priority: 01.02.2023 CN 202310050794
(71) Applicant: Vivo Mobile Communication Co., Ltd., Dongguan, Guangdong 523863 (CN)
(72) Inventor: LIU, Siqi, Dongguan, Guangdong 523863 (CN); JI, Zichao, Dongguan, Guangdong 523863 (CN)
(74) Representative: dompatent
(86) International application number: PCT/CN2024/073924
(87) International publication number: WO 2024/160109

(57) **Abstract**

The present application belongs to the technical field of communications. Disclosed are a DCI size determination method, a DCI sending method, an apparatus, and a related device. The DCI size determination method in the embodiment of the present application comprises: a terminal determining a target size on the basis of a target cell combination and a target bandwidth part (BWP) combination, wherein the target size comprises at least one first size, and the first size comprises at least one of the following: the size of first DCI, and the size of a domain in the first DCI, the first DCI is DCI that is capable of scheduling a plurality of cells or a plurality of carriers, the target BWP combination comprises at least one BWP combination, and the BWP combination comprises BWPs corresponding to one or more cells.

## Description

### CROSS-REFERENCE TO RELATED APPLICATIONS

The present disclosure claims the priority to Chinese Patent Application No. 202310050794.1 filed in China on February 01, 2023, which is incorporated herein in its entirety by reference.

### TECHNICAL FIELD

The present disclosure belongs to the technical field of communication, and particularly relates to a method and apparatus for determining a size of DCI, a method and apparatus for sending DCI, and a related device.

### BACKGROUND

In the related art, one piece of downlink control information (Downlink Control Information, DCI) can merely schedule uplink (Uplink, UL) or downlink (Downlink, DL) data from one cell (cell), resulting in high DCI overheads in a case of carrier aggregation (Carrier Aggregation, CA). In order to reduce the DCI overheads, make more resources available for UL or DL transmission, and increase the throughput of the system, it is necessary to support one piece of DCI in simultaneous scheduling of UL or DL transmission from several cells. The multi-cell scheduling DCI (multi-cell scheduling DCI, mc-DCI) can schedule a combination of numerous cells from a cell set (cell set). The cells or cell combinations vary in parameter configuration and features, and the size of a field in the DCI will change along with the bandwidth part (Bandwidth Part, BWP) change. If the size of the field (field) of the DCI and the DCI size (size) are derived based on the specific parameter configuration and features of the cell combinations, a terminal needs to perform blind detection on excessively many DCI sizes, and overheads of the terminal are increased.

### SUMMARY

Embodiments of the present disclosure provide a method and apparatus for determining a size of downlink control information (DCI), a method and apparatus for sending DCI, and a related device, which can solve the problem that in the prior art, a terminal needs to perform blind detection on excessively many DCI sizes, and overheads of the terminal are increased.

In a first aspect, a method for determining a size of DCI is provided. The method includes:
determining, by a terminal, a target size based on a target cell combination and a target bandwidth part (BWP) combination, where the target size includes at least one first size, and the first size includes at least one of the following: a first DCI size and a size of a field in first DCI; and
the first DCI is DCI that can be used to schedule a plurality of cells or a plurality of carriers, the target BWP combination includes at least one BWP combination, and the BWP combination includes a BWP or BWPs corresponding to one or more cells.

In a second aspect, a method for sending DCI is provided. The method includes:
sending, by a network side device, first DCI to a terminal; where
the first DCI is DCI that can be used to schedule a plurality of cells or a plurality of carriers, a first DCI size or a size of a field in the first DCI is determined based on a target cell combination and a target BWP combination, and the BWP combination includes a BWP or BWPs corresponding to one or more cells.

In a third aspect, an apparatus for determining a size of DCI is provided. The apparatus includes:
a determining module configured to determine a target size based on a target cell combination and a target bandwidth part (BWP) combination, where the target size includes at least one first size, and the first size includes at least one of the following: a first DCI size and a size of a field in first DCI; and
the first DCI is DCI that can be used to schedule a plurality of cells or a plurality of carriers, the target BWP combination includes at least one BWP combination, and the BWP combination includes a BWP or BWPs corresponding to one or more cells.

In a fourth aspect, an apparatus for sending DCI is provided. The apparatus includes:
a sending module configured to send first DCI to a terminal; where
the first DCI is DCI that can be used to schedule a plurality of cells or a plurality of carriers, a first DCI size or a size of a field in the first DCI is determined based on a target cell combination and a target BWP combination, and the BWP combination includes a BWP or BWPs corresponding to one or more cells.

In a first aspect, a terminal is provided. The terminal includes a processor and a memory, where the memory stores a program or an instruction that is runnable on the processor, and the program or the instruction implements steps of the method in the first aspect when executed by the processor.

In a sixth aspect, a terminal is provided. The terminal includes a processor and a communication interface, where the processor is configured to determine a target size based on a target cell combination and a target bandwidth part (BWP) combination, where the target size includes at least one first size, and the first size includes at least one of the following: a first DCI size and a size of a field in the first DCI; and the first DCI is DCI that can be used to schedule a plurality of cells or a plurality of carriers, the target BWP combination includes at least one BWP combination, and the BWP combination includes a BWP or BWPs corresponding to one or more cells.

In a seventh aspect, a network side device is provided. The network side device includes a processor and a memory, where the memory stores a program or an instruction that is runnable on the processor, and the program or the instruction implements steps of the method in the second aspect when executed by the processor.

In an eighth aspect, a network side device is provided. The network side device includes a processor and a communication interface, where the communication interface is configured to send first DCI to a terminal; and the first DCI is DCI that can be used to schedule a plurality of cells or a plurality of carriers, a first DCI size or a size of a field in the first DCI is determined based on a target cell combination and a target BWP combination, and the BWP combination includes a BWP or BWPs corresponding to one or more cells.

In a ninth aspect, a communication system is provided. The communication system includes a terminal and a network side device, where the terminal is configured to perform steps of the method in the first aspect, and the network side device is configured to perform steps of the method in the second aspect.

In a tenth aspect, a readable storage medium is provided. The readable storage medium stores a program or an instruction, where the program or the instruction implements steps of the method in the first aspect, or steps of the method in the second aspect when executed by a processor.

In an eleventh aspect, a chip is provided. The chip includes a processor and a communication interface, where the communication interface is coupled to the processor, and the processor is configured to run a program or an instruction to implement the method in the first aspect, or the method in the second aspect.

In a twelfth aspect, a computer program/program product is provided. The computer program/program product is stored in a storage medium, and the computer program/program product is executed by at least one processor to implement steps of the method in the first aspect, or steps of the method in the second aspect.

In the embodiment of the present disclosure, the terminal determines, based on the target cell combination and the target BWP combination, the first DCI size and/or the size of the field in the first DCI that can be used for scheduling the plurality of cells or the plurality of carriers. Then, the terminal can perform the blind detection on the DCI based on the determined first DCI size and/or the size of the field in the first DCI. Thus, complexity of the blind detection of the first DCI by the terminal can be effectively reduced in a multi-cell scheduling scenario, and the overheads of the terminal are reduced.

### BRIEF DESCRIPTION OF THE DRAWINGS

FIG. 1 is a block diagram of a wireless communication system applicable to an embodiment of the present disclosure;
FIG. 2 is a flowchart of a method for determining a size of downlink control information (DCI) according to an embodiment of the present disclosure;
FIG. 3 is a flowchart of a method for sending DCI according to an embodiment of the present disclosure;
FIG. 4 is a structural diagram of an apparatus for determining a size of DCI according to an embodiment of the present disclosure;
FIG. 5 is a structural diagram of an apparatus for sending DCI according to an embodiment of the present disclosure;
FIG. 6 is a structural diagram of a communication device according to an embodiment of the present disclosure;
FIG. 7 is a structural diagram of a terminal according to an embodiment of the present disclosure; and
FIG. 8 is a structural diagram of a network side device according to an embodiment of the present disclosure.

### DETAILED DESCRIPTION

Technical solutions in embodiments of the present disclosure will be clearly described below in conjunction with accompanying drawings in the embodiments of the present disclosure. Apparently, the embodiments described are some embodiments rather than all embodiments of the present disclosure. Based on the embodiments in the present disclosure, all other embodiments derived by those of ordinary skill in the art should fall within the protection scope of the present disclosure.

Terms such as "first" and "second" in the description and the claims of the present disclosure are used for distinguishing similar objects rather than describing a specific sequence or a sequential order. It should be understood that terms used in this way are interchangeable in appropriate cases, such that the embodiment of the present disclosure can be implemented in order other than those illustrated or described herein. In addition, the objects distinguished with "first" or "second" are usually objects of one class with the number of objects unlimited. For example, a first object can indicate one or more first objects. In addition, "and/or" in the description and the claims indicates at least one of connected objects, and the character "/" can indicate that front and back associated objects are in an "or" relationship or an "and/or" relationship. The term "or" in the description and the claims indicates at least one of the connected objects. For example, "A or B" covers three solutions, that is, a solution 1 of including A and excluding B, a solution 2 of including B and excluding A, and solution 3 of including A and B.

It is worth pointing out that the technology described in the embodiment of the present disclosure is not limited to a long term evolution (Long Term Evolution, LTE)/LTE-advanced (LTE-Advanced, LTE-A) system, and may also be used in another wire communication system, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of the present disclosure are often used interchangeably, and the technology described may be used for the systems and radio technologies mentioned above, and may alternatively be used for other systems and radio technologies. A new radio (New Radio, NR) system is illustratively described in the following description, and the term NR is used in most of the following description. However, these technologies may alternatively be applied to application other than the NR system application, such as a 6^{th} Generation (6^{th} Generation, 6G) communication system.

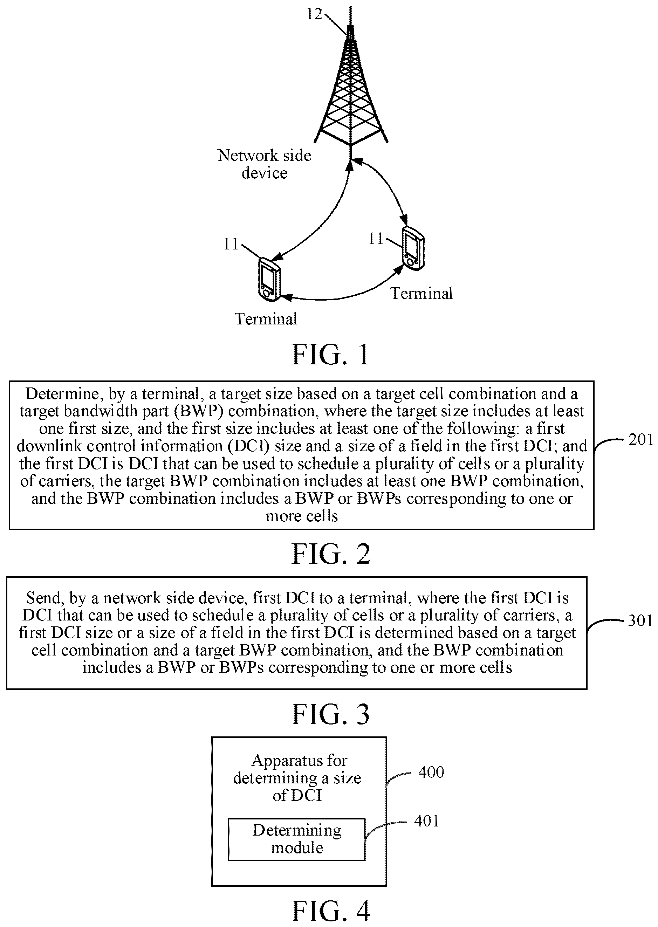

FIG. 1 shows a block diagram of a wireless communication system applicable to the embodiment of the present disclosure. The wireless communication system includes a terminal 11 and a network side device 12. The terminal 11 may be a mobile phone, a tablet personal computer (Tablet Personal Computer), a laptop computer (Laptop Computer) or referred to as a notebook computer, a personal digital assistant (Personal Digital Assistant, PDA), a palmtop, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), an in-vehicle device (Vehicle User Equipment, VUE), pedestrian user equipment (Pedestrian User Equipment, PUE), a smart home (a house device with a wireless communication function, such as a refrigerator, a television, a washer, or a furniture), a game machine, a personal computer (personal computer, PC), an automated teller machine or a self-service machine, and other terminal side devices. The wearable device includes: a smart watch, a smart band, smart headphones, smart glasses, a smart jewelry (a smart bracelet, a smart hand chain, a smart ring, a smart necklace, a smart anklet, a smart ankle chain, etc.), a smart wristband, smart clothing, etc. It should be noted that a specific type of the terminal 11 is not limited in the embodiment of the present disclosure. The network side device 12 may include an access network device or a core network device. The access network device may alternatively be referred to as a radio access network device, a radio access network (Radio Access Network, RAN), a radio access network function, or a radio access network unit. The access network device may include a base station, a wireless local area network (Wireless Local Area Network, WLAN) access point, a WiFi node, etc. The base station may be referred to as a node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmitting receiving point (Transmitting Receiving Point, TRP), or other appropriate terms in the field. As long as the same technical effect is achieved, the base station is not limited to a specific technical term. It should be noted that in the embodiment of the present disclosure, an introduction will be provided merely with the base station in the NR system as an example, and a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), etc. It should be noted that in the embodiment of the present disclosure, an introduction will be provided merely with the core network equipment in the NR system as an example, and a specific type of the core network device is not limited.

For better understanding, the related concepts and principles that may be involved in the embodiment of the present disclosure will be explained below.

At present, a fifth-generation (5G) new radio (NR) system supports configuration of one or more component carriers (Component Carrier, CC) or cells for user equipment (UE). In the related art, one piece of downlink control information (DCI) may merely schedule a physical downlink shared channel (Physical downlink shared channel, PDSCH) or a physical uplink shared channel (Physical Uplink Shared Channel, PUSCH) from one cell or CC.

For each scheduled cell, the UE does not expect a number of different DCI sizes monitored by a physical downlink control channel (Physical downlink control channel, PDCCH) to exceed 4, or expect a number of different DCI sizes monitored by the PDCCH scrambled by a cell radio network temporary identifier (Cell Radio Network Temporary Identifier, C-RNTI) to exceed 3 either.

A size of a field of DCI 0_1:

In the field of DCI 0_1, most fields are fixed in size or the size of the field is determined according to configuration or features of the scheduled cell except for special cases of the following fields:

Carrier indicator field (Carrier Indicator Field, CIF): when the cell scheduled by the DCI is not a cell where the DCI belongs (that is, cross-carrier scheduling), the CIF has 3 bits. When the cell scheduled by the DCI is the cell where the DCI belongs (that is, self-scheduling), whether the CIF exists depends on a configuration parameter of the self-scheduling by radio resource control (Radio Resource Control, RRC);

Secondary cell (Secondary Cell, Scell) dormancy indication (dormancy indication) field: when the following conditions are satisfied simultaneously:
a. transmission of the DCI within discontinuous reception (Discontinuous Reception, DRX) active time (active Time) of a primary cell (Primary cell, Pcell);
b. dormancy group within active time (DormanCygroupwithInactive Time) configured for at least one Scell; and
c. two or more DL BWPs configured for the at least one Scell;
the Scell redundancy indication field exists, and a size is determined according to a number of groups (Group) configured for the Group.

A size of a field of DCI 1_1:
In the field of DCI 1_1, most fields are fixed in size or the size of the field is determined according to configuration or features of the scheduled cell. The following fields are special cases:
CIF: when the cell scheduled by the DCI is not a cell where the DCI belongs (that is, cross-carrier scheduling), the CIF has 3 bits. When the cell scheduled by the DCI is the cell where the DCI belongs (that is, self-scheduling), whether the CIF exists depends on a configuration parameter of the self-scheduling by RRC;
Transmission configuration indication (Transmission configuration indication) field: this field is configured in each control resource set (Control resource set, Coreset) of a BWP of the scheduled cell. When a plurality of Coresets in one BWP vary in configuration, the size of the field varies (0 or 3 bits). When a plurality of search spaces in one BWP are associated with different Coresets, the size of DCI 1_1 needs zero padding in the end to be uniformed to a maximum size.

Scell dormancy indication field: when the following conditions are satisfied simultaneously:
a. transmission of the DCI within DRX active time of a Pcell;
b. dormancy group within active time configured for at least one Scell; and
c. two or more DL BWPs configured for the at least one Scell;
the Scell redundancy indication field exists, and a size is determined according to a number of groups (Group) configured for the Group.

About the BWP:
A plurality of BWPs may be configured for one cell, but merely one BWP may be active at a time point, and is referred to as an active BWP. The UE determines the DCI size based on the active BWP. That is, when the BWP changes, the DCI size may alternatively change. However, at the same time point, for one scheduled cell, a DCI format has merely one DCI size.

In the related art, one piece of DCI may merely schedule uplink (UL) or downlink (DL) data from one cell, resulting in high DCI overheads in a case of carrier aggregation (CA). In order to reduce the DCI overheads, make more resources available for UL or DL transmission, and increase the throughput of the system, it is necessary to support one piece of DCI in simultaneous scheduling of UL or DL transmission from several cells. The multi-cell scheduling DCI (multi-cell scheduling DCI, mc-DCI) may schedule a combination of numerous cells from a cell set (cell set). The cells or cell combinations vary in parameter configuration and features, and the size of a field in the DCI will change along with the bandwidth part (BWP) change. If the size of the field (field) of the DCI and the DCI size are derived based on the specific parameter configuration and features of the cell combinations, a terminal needs to perform blind detection on excessively many DCI sizes, and overheads of the terminal are increased.

For example, a scenario A: it is assumed that the mc-DCI carries a 2-bit BWP indicator, and a cell set includes a cell 1, a cell 2, a cell 3, and a cell 4. The cell 1 and the cell 2 may be jointly scheduled and form a cell combination 1, the cell 3 and the cell 4 may be jointly scheduled and form a cell combination 2. Four BWPs are configured for each of the cell 1, the cell 2, cell 3, and cell 4. For example, a value of 00 of the BWP indicator corresponds to a BWP with BWP ID=1, a value of 01 of the BWP indicator corresponds to a BWP with BWP ID=2, a value of 10 of the BWP indicator corresponds to a BWP with BWP ID=3, and a value of 11 of the BWP indicator corresponds to a BWP with BWP ID=4. For example, a value of 00 of the BWP indicator corresponds to a BWP with BWP ID=0, a value of 01 of the BWP indicator corresponds to a BWP with BWP ID=1, a value of 10 of the BWP indicator corresponds to a BWP with BWP ID=2, and a value of 11 of the BWP indicator corresponds to a BWP with BWP ID=3. At a moment n of a slot (slot), an active BWP of the cell 1 and an active BWP of the cell 2 are a BWP 1 and a BWP 2 respectively, and an active BWP of the cell 3 and an active BWP of the cell 4 are a BWP 3 and a BWP 4 respectively. Then, a piece of me-DCI is received instructing to schedule the cell combination 1, that is, the cell 1 and the cell 2, and the BWP indicator indicates 10, that is, BWP ID=3. Such a case indicates that the mc-DCI triggers a change of the cell 1 from the BWP 1 to the BWP 3, and a change of the cell 2 from the BWP 2 to the BWP 3. Since the terminal does not know whether the mc-DCI plans to schedule the cell combination 1 or the cell combination 2 before successfully decoding the mc-DCI, the terminal may merely perform blind detection based on all possible assumptions. In this case, there are eight assumptions in theory:
Assumption 1: the cell combination 1 is matched with BWP indicator=00;
Assumption 2: the cell combination 1 is matched with BWP indicator=01;
Assumption 3: the cell combination 1 is matched with BWP indicator=10;
Assumption 4: the cell combination 1 is matched with BWP indicator=11;
Assumption 5: the cell combination 2 is matched with BWP indicator=00;
Assumption 6: the cell combination 2 is matched with BWP indicator=01;
Assumption 7: the cell combination 2 is matched with BWP indicator=10; and
Assumption 8: the cell combination 2 is matched with BWP indicator=11.

In this way, complexity of the blind detection by the terminal is increased, and high overheads of the terminal are cased. In order to solve these problems, the present disclosure provides a method for determining a size of DCI.

The method for determining a size of DCI according to the embodiment of the present disclosure will be described in detail through some embodiments and their application scenarios and in conjunction with the accompanying drawings.

With reference to FIG. 2, FIG. 2 is a flowchart of the method for determining a size of DCI according to the embodiment of the present disclosure. As shown in FIG. 2, the method includes:
Step 201: A terminal determines a target size based on a target cell combination and a target BWP combination. The target size includes at least one first size, and the first size includes at least one of the following: a first DCI size and a size of a field in the first DCI. The first DCI is DCI that can be used to schedule a plurality of cells or a plurality of carriers, the target BWP combination includes at least one BWP combination, and the BWP combination includes a BWP or BWPs corresponding to one or more cells.

It should be noted that the cell combination may alternatively be interpreted as a carrier combination. The cell combination may include at least two cells, and the cells in the cell combination may be jointly scheduled. A cell set may be interpreted as a set including a plurality of cells, and the cells in the cell set may not necessarily be jointly scheduled, or may be jointly scheduled. Illustratively, the cell set includes a cell 1, a cell 2, a cell 3, and a cell 4. The cell 1 and the cell 2 may be jointly scheduled and form a cell combination 1, and the cell 3 and the cell 4 may be jointly scheduled and form a cell combination 2.

The BWP combination includes BWPs corresponding to one or more cells. For example, four BWPs (except for an initial BWP) are configured for each of the cell 1, the cell 2, the cell 3, and the cell 4. The BWP combination may include active BWPs of these four cells, or the BWP combination may include BWPs on any two cells, which will not be repeated herein. It should be noted that in the embodiment of the present disclosure, the BWP combination may be interpreted as a set composed of BWPs of the plurality of cells or a set composed of BWPs of a plurality of cells corresponding to or indicated by the first DCI. Although a BWP indicator may merely indicate one BWP identifier or index, the BWP indicator may still correspond to BWPs of the plurality of cells.

In the embodiment of the present disclosure, the first DCI may schedule the plurality of cells or the plurality of carriers. In some scenarios, the first DCI may alternatively be referred to as mc-DCI, and the first DCI size is a size of the mc-DCI. The terminal determines the first DCI size and/or the size of the field in the first DCI based on the target cell combination and the target BWP combination. For example, the terminal may determine the first DCI size and/or the size of the field in the first DCI based on all current cell combinations and the BWP combination composed of active BWPs corresponding to these cells. The first DCI size may be a number of bits included in the first DCI, the size of the field in the first DCI may be a number of bits in the field in the first DCI, and all the cell combination may be a cell combination that may be formed by the cells configured for the terminal.

In the embodiment of the present disclosure, the terminal determines, based on the target cell combination and the target BWP combination, the first DCI size and/or the size of the field in the first DCI that can be used for scheduling the plurality of cells or the plurality of carriers. Then, the terminal can perform the blind detection on the DCI based on the determined first DCI size and/or the size of the field in the first DCI. Thus, complexity of the blind detection of the first DCI can be effectively reduced in a multi-cell scheduling scenario, and overheads of the terminal are reduced.

Optionally, step 201 may include at least one of the following:
the terminal determines the target size based on all cell combination and a first target BWP combination. The target BWP combination includes the first target BWP combination; and
the terminal determines the target size based on the target BWP combination and the target cell combination when in a first state. The target cell combination is a cell combination including merely an active cell or a non-dormant cell, or the target cell combination includes all the cell combination. The first state is that multi-cell scheduling is configured for the terminal, at least one cell is deactivated or dormant, or an active BWP of at least one cell is a dormant BWP; or the first state is that a plurality of cells of the terminal or BWPs of the plurality of cells can be scheduled by multi-cell scheduling, at least one cell is deactivated or dormant, or an active BWP of at least one cell is a dormant BWP.

It should be noted that a dormant cell in the embodiment of the present disclosure may be understood as a cell whose active BWP is a dormant BWP (dormant BWP). A case that the cell enters a dormant state may be understood that when the active BWP of the cell is the dormant BWP, the cell enters dormancy. The non-dormant cell may be understood as a cell whose BWP is a BWP other than the dormant BWP. The BWP in dormancy may be interpreted as the dormant BWP.

In an implementation, the terminal determines the target size based on all the cell combination and the first target BWP combination. For example, the first target BWP combination includes the active BWP (active BWP), the terminal may determine the first DCI size that may be used for scheduling the plurality of cells or the plurality of carriers based on all the cell combination and the first target BWP combination composed of active BWPs of the cells in these cell combinations. Optionally, the first target BWP combination may also be another possible case, which will be described in detail in a subsequent embodiment.

Optionally, in another implementation, when (1) the multi-cell scheduling is configured for the terminal, or (2) the plurality of cells of the terminal or the BWPs of the plurality of cells may be used for the multi-cell scheduling, at least one of the cells is deactivated or dormant, or the active BWP of the at least one cell is the dormant (dormant) BWP (such a cell may be referred as a dormant cell). In two cases, the terminal determines the first DCI size and/or the size of the field in the first DCI based on the target BWP combination and the cell combination including merely the active cell (or the non-dormant cell) or all the cell combination.

In the embodiment of the present disclosure, how the terminal determines the first DCI size and/or the size of the field in the first DCI used for scheduling the plurality of cells or the plurality of carriers in different scenarios is made clear, so as to reduce the complexity of the blind detection of the first DCI by the terminal.

Optionally, in an implementation, the first target BWP combination includes an active BWP combination or a first BWP combination, and the first BWP combination includes at least one of the following:
(1) a BWP combination indicated by a BWP indicator (BWP indicator);
(2) a BWP combination that can be indicated by the BWP indicator;
(3) a combination of any BWP of a first cell; and
(4) a combination of a specific BWP of the first cell; and
the first cell includes any one of the following: at least one of cells in a cell set, at least one of cells in a cell combination, and at least one of cells configured for the terminal.

It should be noted that with the first size including the first DCI size as an example, when the first target BWP combination includes the first BWP combination, the terminal may determine that one size of the DCI is the size of the DCI based on all the cell combination, and the first BWP combination.

Specifically, the first BWP combination includes the BWP combination indicated by the BWP indicator. The BWP combination indicated by the BWP indicator refers to a particular BWP combination indicated by the BWP indicator. In this case, the terminal may determine the first DCI size and/or the size of the field in the first DCI based on the target cell combination (for example, all the cell combination) and the BWP combination indicated.

Or, the first BWP combination includes the BWP combination that can be indicated by the BWP indicator. The phrase the BWP indicator may indicate indicates that a plurality of the indicated may exist. That is, a plurality of BWP combinations indicated by the BWP indicator may exist. In this case, the terminal may determine the first DCI size and/or the size of the field in the first DCI based on the target cell combination (for example, all the cell combination) and the plurality of BWP combinations indicated.

For example, when the BWP indicator has four values, and the values correspond to a BWP 1, a BWP 2, a BWP 3, and a BWP 4 respectively, the first BWP combination (BWP combination) may refer to a BWP combination (BWP combination) composed of the BWP 1 on the cell combination (cell combination) scheduled, a BWP combination composed of the BWP 2 on the cell combination scheduled, a BWP combination composed of the BWP 3 on the cell combination scheduled, and a BWP combination composed of the BWP 4 on the cell combination scheduled. Further, the BWP indicator may merely trigger a change of any two of all possible BWP combinations that the BWP indicator may indicate or correspond to. In the above example, the BWP indicator may instruct the cell combination 1 to perform a change between any two of the BWP 1/BWP 1, the BWP 2/BWP 2, the BWP 3/BWP 3, and the BWP 4/BWP 4. However, when the currently active BWP of the cell combination 1 is BWP1/BWP2 (that is, beyond a range of BWP combinations indicated by the BWP indicator), the BWP change may not be triggered by the BWP indicator.

Or, the first BWP combination includes the combination of any BWP of the cell (or the cell in the cell combination or the cell configured for the terminal) in the cell set. For example, three BWPs are configured for each of the cell 1, the cell 2, the cell 3, and the cell 4, and then the first BWP combination may be the combination of any BWP on any at least two cells. For example, three BWPs are configured for each of the cell 1, the cell 2, the cell 3, and the cell 4, and then the first BWP combination may be the combination of any BWP on any cell combination.

Or, the first BWP combination includes the combination of the specific BWP of the cell (or the cell in the cell combination or the cell configured for the terminal) in the cell set. Optionally, the specific BWP may be a BWP other than the initial BWP (initial BWP). For example, the first BWP combination may be a combination of BWPs other than the initial BWP of the cells in the cell combination.

Optionally, in the embodiment of the present disclosure, the active BWP combination is composed based on an active BWP corresponding to a second cell. The second cell includes any one of the following: the at least one of cells in the cell set, the at least one of cells in the cell combination, and the at least one of cells configured for the terminal.

For example, a currently active BWP of the cell 1, a currently active BWP of the cell 2, a currently active BWP of the cell 3, and a currently active BWP of the cell 4 are the BWP 1, BWP 2, BWP 3, and BWP4 respectively, and then the active BWP combination is the combination of active BWPs on any at least two cells. For example, three BWPs are configured for each of the cell 1, the cell 2, the cell 3, and the cell 4, and then the active BWP combination is the combination of the active BWP on the cell of any cell combination.

In the embodiment of the present disclosure, when the first target BWP combination includes the active BWP combination, step 201 may include at least one of the following:
the terminal determines the first size corresponding to each cell combination based on an active BWP of all the cell combination, and determines that one of first sizes is the target size; and
the terminal acquires a first combination based on the active BWP of all the cell combination, and determines N target sizes based on the first combination, and N is a positive integer.

For example, in an implementation, with the first size including the first size of the DCI as an example, the terminal determines the size of the DCI corresponding to each cell combination based on the active BWP of each cell combination of all the cell combination, and determines that a maximum size of the DCI is the first DCI size. Illustratively, with the scenario A as the background, the sizes of the DCI are derived based on cell 1 active BWP 1 and cell 2 active BWP 2 as well as cell 3 active BWP 3 and cell 4 active BWP 4. By a specific method, one DCI size 1 is derived based on cell 1 active BWP 1 and cell 2 active BWP 2, one DCI size 2 is derived based on cell 3 active BWP 3 and cell 4 active BWP 4, and a greater one of the size 1 and the size 2 is taken as the first DCI size. In this way, the terminal can be prevented from performing the blind detection repeatedly, and the overheads of the terminal are effectively reduced.

Or, in another implementation, for example, with the first size including the first DCI size as an example, the terminal determines N sizes, referred to as the sizes of the first DCI, of the DCI based on all the cell combination and a BWP corresponding to an identifier or an index of the currently active BWP. For example, with the scenario A as the background, the active BWPs of the cell 1 and the cell 2 in the cell combination 1 are the BWP 1 and the BWP 2, and the active BWPs of the cell 3 and the cell 4 in the cell combination 2 are the BWP 3 and the BWP 4. Then, one DCI size 1 is derived based on cell 1 active BWP 1 and cell 2 active BWP 2 as well as cell 3 BWP 1 and cell 4 BWP 2, and one DCI size 2 is derived based on cell 1 BWP 3 and cell 2 BWP 4 as well as cell 3 active BWP 3 and cell 4 active BWP 4. The two DCI size corresponds to all the cell combination matched with the BWP 1 and the BWP 2, and all the cell combination matched with the BWP 3 and the BWP 4 respectively, and the DCI size determined in this way is small, such that the overheads of the terminal are reduced. Optionally, the value of N may be equal to a number of combinations of all the cell combination.

Or, in yet another implementation, for example, with the first size including the first DCI size as an example, the terminal acquires all possible combinations (that is, the first combinations) based on all the cell combination and the BWP corresponding to the identifier or the index of the currently active BWP and determine one DCI size, that is, the first DCI size. For example, with the scenario A as the background, the active BWPs of the cell 1 and the cell 2 in the cell combination 1 are the BWP 1 and the BWP 2, and the active BWPs of the cell 3 and the cell 4 in the cell combination 2 are the BWP3 and BWP4. Thus, based on each of four assumptions, that is, cell 1 active BWP 1 and cell 2 active BWP 2, cell 3 BWP 1 and cell 4 BWP 2, cell 1 BWP 3 and cell 2 BWP 4, as well as cell 3 active BWP 3 and cell 4 active BWP 4, one DCI size is derived, and a maximum DCI size under these assumptions is taken as the first DCI size.

For example, with the first size including the first DCI size as an example similarly, the active BWPs of the cell 1 and the cell 2 in the cell combination 1 are the BWP 1 and the BWP 2, and the active BWPs of the cell 3 and the cell 4 in the cell combination 2 are the BWP3 and BWP4. Thus, one DCI size 1 is derived based on cell 1 active BWP 1 and cell 2 active BWP 2 as well as cell 3 BWP 1 and cell 4 BWP 2, one DCI size 2 is derived based on cell 1 BWP 3 and cell 2 BWP 4 as well as cell 3 active BWP 1 and cell 4 active BWP 2, and a greater one of the two DCI sizes is taken as the first DCI size.

In the embodiment of the present disclosure, when the first target BWP combination includes the first BWP combination, step 201 may include:
the terminal determines the first sizes corresponding to each cell combination based on the first BWP combination of all the cell combination, and determines that one of first sizes is the target size.

For example, with the first size including the first DCI size as an example, the terminal may determine one DCI size based on a possible BWP combination (that is, the first BWP combination) of each cell combination, that is, each cell combination corresponds to one DCI size. The maximum DCI size is taken as the first DCI size. In this way, the first DCI size has nothing to do with the currently active BWP, and will not change with the change of the active BWP. No matter which active BWP of each cell is at the moment n, the first DCI size is unique, a case that the terminal needs to determine the first DCI size every time the BWP changes can be avoided, and the overheads of the terminal can be reduced. For example, in the scenario A, the DCI size is determined based on the eight assumptions, and the maximum DCI size is taken as the first DCI size.

In the embodiment of the present disclosure, when the terminal is in the first state, that is, the plurality of cells configured for the terminal or the BWPs of the plurality of cells can be scheduled by the multi-cell scheduling, at least one cell is deactivated or dormant, or the BWP of the at least one cell is a dormant BWP, step 201 may include at least one of the following:
(1) the terminal determines the target size based on the cell combination including merely the active cell or the non-dormant cell, and the active BWP combination;
(2) the terminal determines the target size based on the cell combination including merely the active cell or the non-dormant cell, and the first BWP combination;
(3) the terminal determines the target size based on all the cell combination, and the first BWP combination;
(4) the terminal determines the target size based on all the cell combination, and a second BWP combination; and
(5) the terminal determines the target size based on all the cell combination, a cell combination composed of an active cell or a non-dormant cell in a cell combination including a first target cell, and a third BWP combination, where the first target cell is a dormant cell or a deactivated cell.

Specifically, for the mode (1), the terminal determines the target size based on the cell combination in which all cells are active cells or non-dormant cells (that is, the cell combination where a deactivated or dormant cell belongs is excluded) and the active BWP combination. For example, with the scenario A as the background, when the cell 1 is deactivated or dormant, the cell combination 1 is not considered. It is assumed that the currently active BWPs of the cell 3 and the cell 4 are the BWPs 3, the first DCI size and/or the size of the field in the first DCI are/is determined based on the cell combination 2 matched with the BWP 3.

Specifically, for the mode (2), the terminal determines the target size based on the cell combination in which all cells are active cells or non-dormant cells (that is, excluding the cell combination where a deactivated or dormant cell belongs) and the first BWP combination. For example, with the scenario A as the background, when the cell 1 is deactivated or dormant, the cell combination 1 is not considered, and the target size is determined based on assumptions 5, 6, 7, and 8. That is, the first DCI size and/or the size of the field in the first DCI are/is determined based on the cell combination 2 and the first BWP combination (for example, the combination of the BWP indicated by the BWP indicator).

For the mode (3), the terminal determines the first DCI size and/or the size of the field in the first DCI based on all the cell combination (that is, the cell combination where the deactivated or dormant cell belongs is not excluded) and the first BWP combination. Reference can be made to the description in the foregoing embodiment specifically for possible cases of the first BWP combination, which will not be repeated herein.

For the mode (4), the terminal determines the first DCI size and/or the size of the field in the first DCI based on all the cell combination (that is, the cell combination where the deactivated or dormant cell belongs is not excluded) and the second BWP combination (for example, the BWP combination including the initial BWP, and the BWP combinations including the BWP corresponding to the deactivated cell).

Optionally, the second BWP combination includes any one of the following:
the first BWP combination;
a BWP combination where a first BWP belongs; and
a BWP combination other than the BWP combination where the first BWP belongs; where
the first BWP is a BWP corresponding to the deactivated cell or the dormant cell; and the first BWP includes at least one of the following: an initial BWP (initial BWP), a default BWP (default BWP), a dormant BWP (dormant BWP), a first active BWP (first active BWP), a first BWP within active time (a BWP corresponding to firstWithinActiveTimeBWP-Id), and a first BWP outside the active time (a BWP corresponding to firstOutsideActiveTimeBWP-Id).

For example, for the deactivated cell or the dormant cell, it is assumed that the BWP corresponding to these cells is the first BWP (for example, the first active BWP or the initial BWP or the default BWP or the dormant BWP or the BWP corresponding to FirstWithInactive Time BWP-ID or the BWP corresponding to firstOutsideActiveTimeBWP-Id-ID), and the terminal may determine the first DCI size and/or the size of the field in the first DCI based on all the cell combination and the BWP combination where the first BWP belongs. Illustratively, when the cell 1 is deactivated or dormant, and the second BWP combination is the BWP combination corresponding to a value of 00 of the BWP indicator, the first DCI size and/or the field in the first DCI are/is determined in consideration of the BWP combination corresponding to the cell combination 1 matched with 00 and the cell combination 2 matched with the active BWP combination.

Or, for the deactivated cell or the dormant cell, the second BWP combination may be the BWP combination where the BWP corresponding to the deactivated cell (or the dormant cell) belongs, and the terminal determines the first DCI size and/or the size of the field in the first DCI based on these BWP combinations and all the cell combination.

Optionally, when the cell combination includes the active cell or the non-dormant cell, or the cell combination includes merely the active cell or the non-dormant cell, the second BWP combination is the active BWP combination. For example, when cell 1 is deactivated or dormant, the active BWP of the cell 2 is the BWP 2, and the first BWP is a BWP X, the combination composed of the BWP X and the BWP 2 is considered for the cell combination 1. That is, based on cell1 BWP X and cell 2 active BWP2 as well as cell combination2 matched with the active BWP combination, the first DCI size and/or the size of the field in the first DCI are/is determined.

Or, for the deactivated cell or the dormant cell, the second BWP combination may be a BWP combination other than the BWP combination where the first BWP belongs. For example, when the cell 1 is deactivated or dormant, the active BWP of the cell 2 is the BWP 2, and the first BWP is a BWP X, a combination composed of the BWP and the BWP 2 other than the BWP X is considered for the cell combination 1. That is, based on the BWP and cell2 active BWP2 other than cell1 BWP X, and the cell combination 2 matched with the active BWP combination, the first DCI size and/or the size of the field in the first DCI are/is determined.

For the mode (5), the terminal determines the target size based on all the cell combination (that is, the cell combination where the deactivated or dormant cell belongs is not excluded), the cell combination composed of the active cell (or the non-dormant cell) of the cell combinations including the deactivated cell or dormant cell, and the third BWP combination.

Optionally, when the target size is determined based on the mode (5), the cell combination and the third BWP combination satisfy at least one of the following:
(a) when the cell combination is a cell combination including the deactivated cell or the dormant cell, the third BWP combination is a combination of a specific BWP or a BWP combination other than a BWP combination where a third BWP belongs. The third BWP is any one of the following: an initial BWP, a default BWP, a dormant BWP, a first active BWP, a first BWP within active time, and a first BWP outside the active time. The combination of the specific BWP may be a BWP combination corresponding to a specific BWP indication value (for example, 00); and
(b) when the cell combination is the cell combination including merely the active cell or the non-dormant cell, the third BWP combination is the first BWP combination. Reference can be made to the description in the foregoing embodiment specifically for possible cases of the first BWP combination, which will not be repeated herein.

Illustratively, when cell 1 is deactivated or dormant, a BWP combination other than the BWP combination where the specific BWP belongs is considered for the cell combination 1, for example, the BWP combination corresponding to the BWP indicator with a value other than 00, with the scenario A as the background. That is, for the cell combination 1, three BWP combinations with values 01, 10, and 11 of the BWP indicator are considered merely, while four BWP combinations with values 00 to 11 (that is, 00, 01, 10, and 11) of the BWP indicator are still to be considered for the cell combination 2. In addition, for the active cell 2 in the cell combination 1, four BWP combination with values of 00, 01, 10, and 11 of the BWP indicator still need to be considered.

Optionally, when the target size is determined based on the mode (4), the cell combination and the second BWP combination satisfy at least one of the following:
(a) when the cell combination is a cell combination including the deactivated cell or the dormant cell, the second BWP combination includes any one of the following: a combination of a specific BWP, a BWP combination where a second BWP belongs, a BWP combination other than the second BWP combination, and a BWP combination other than the BWP combination where the second BWP belongs. The second BWP includes any one of the following: an initial BWP, a default BWP, a dormant BWP, a first active BWP, a first BWP within active time, and a first BWP outside the active time. The combination of the specific BWP may be a BWP combination corresponding to a specific BWP indication value (for example, 00); and
(b) when the cell combination is the cell combination including merely the active cell or the non-dormant cell, the second BWP combination is the first BWP combination. Reference can be made to the description in the foregoing embodiment specifically for possible cases of the first BWP combination, which will not be repeated herein.

For example, with the scenario A as the background, and with the first size including the first DCI size as an example, when the cell 1 is deactivated or dormant, the terminal merely needs to consider the BWP combination where the second BWP belongs for the cell combination 1 in a case of determining the first DCI size, for example, the BWP combination corresponding to the BWP indicator with a value of 00. That is, the BWP combination with the value of 00 of the BWP indicator is merely considered for the cell combination 1, while four BWP combinations with values of 00, 01, 10, and 11 of the BWP indicator should still be considered for the cell combination 2. For example, when the cell 1 is deactivated or dormant, the terminal considers the BWP combination other than the BWP combination where the second BWP belongs for the cell combination 1 in a case of determining the first DCI size, for example, the BWP combination corresponding to the BWP indicator with a value other than 00. That is, three BWP combinations with the values of 01, 10, and 11 of the BWP indicator are merely considered for the cell combination 1, while four BWP combinations with values of 00, 01, 10, and 11 of the BWP indicator should still be considered for the cell combination 2.

In the embodiment of the present disclosure, the method may further include:
the terminal receives or performs blind detection on the first DCI.

It can be understood that when the terminal determines the first DCI size and/or the size of the field in the first DCI, the terminal receives or performs the blind detection on the first DCI based on the first DCI size and/or the size of the field in the first DCI, so as to ensure scheduling of the plurality of cells based on the first DCI.

Optionally, the step that the terminal receives or performs blind detection on the first DCI includes:
the terminal may receive or perform the blind detection on the first DCI based on the first DCI size when the first DCI indicates the BWP (the BWP indicated is at least partially different from a currently active BWP), or the first DCI indicates or triggers a BWP change, or the first DCI triggers a change from the currently active BWP to another BWP.

For example, for the first DCI that triggers the change from the currently active BWP or a source BWP to another BWP, the terminal performs the blind detection on the first DCI based on the first DCI size. That is, the DCI size triggering the change remains identical to the DCI size derived from the active BWP. Then, when the terminal does not know when the BWP change may be triggered, the terminal may always perform the blind detection according to the DCI size derived from the active BWP. Thus, the blind detection on a plurality of DCI sizes is avoided, and power consumption of the terminal is effectively reduced.

Optionally, the BWP change indicated or triggered by the first DCI is at least one of the following:
a change between BWP combinations that can be indicated by a BWP indicator;
a change between BWP combinations corresponding to multi-cell scheduling;
a change between BWP combinations corresponding to the first DCI;
a change between the first BWP combinations corresponding to the BWP indicator;
a change between the first BWP combinations corresponding to the multi-cell scheduling; and
a change between the first BWP combinations corresponding to the first DCI.

Optionally, when the first DCI indicates or triggers the BWP change, the method further includes any one of the following:
(a) the terminal does not expect that the first DCI indicates or triggers a change between a first object and a BWP other than the first object. The first object is any one of the following:
   the BWP combination that can be indicated by the BWP indicator, a BWP combination corresponding to the multi-cell scheduling, a BWP combination corresponding to the first DCI, a first BWP combination that can be indicated by the BWP indicator, a first BWP combination corresponding to the multi-cell scheduling, and a first BWP corresponding to the first DCI;
(b) the terminal does not expect that the first DCI merely indicates or triggers a BWP change between the part of cells;
(c) the terminal does not expect that the BWP indicator merely indicates or triggers a BWP change between the part of cells;
(d) the terminal does not expect that the first DCI is incapable of indicating or triggering the BWP change between the part of cells; and
(e) the terminal does not expect that the BWP indicator is incapable of indicating or triggering the BWP change between the part of cells. Illustratively, with the scenario A as an example, the value of 00 of the BWP indicator corresponds to (or indicates) a BWP with BWP ID=1, the value of 01 of the BWP indicator corresponds to a BWP with BWP ID=2, the value of 10 of the BWP indicator corresponds to a BWP with BWP ID=3, and the value of 11 of the BWP indicator corresponds to a BWP with BWP ID=4. When states are cell 1 active BWP 1 and cell 2 active BWP 2, the terminal does not expect to receive a first DCI instruction to perform the BWP change from a current state since the BWP indicator cannot indicate the BWP 1 and the BWP 2 at the same time. Further, it may be necessary to change the state to cell 1 active BWP 2 and cell 2 active BWP 2, or cell 1 active BWP 1 and cell 2 active BWP 1, or cell 1 active BWP 3 and cell 2 active BWP 3, or cell 1 active BWP4 and cell 2 active BWP4 through sc-DCI (DCI for scheduling the cell) before the first DCI triggers the BWP change.

Optionally, in some scenarios, the first DCI is also used for any one of the following: a BWP change is not indicated or triggered, a BWP change between all cells is indicated or triggered, and an indicated or corresponding BWP is identical to a currently active BWP; and/or
the BWP indicator satisfies any one of the following: a BWP change is not indicated or triggered, a BWP change between all cells is indicated or triggered, and an indicated or corresponding BWP is identical to a currently active BWP.

Optionally, in the embodiment of the present disclosure, a BWP indicated by the first DCI is at least partially different from a currently active BWP of a third cell, and the third cell is at least one of cells corresponding to or indicated by the first DCI.

Optionally, in the embodiment of the present disclosure, when the first size includes the size of the field in the first DCI, and the size of the field in the first DCI is a size of at least one of fields, the determining, by a terminal, a target size based on a target cell combination and a target BWP combination includes any one of the following:
(1) the terminal determines the size of the at least one of fields in the first DCI based on the target cell combination and an active BWP or an active BWP combination. For example, the terminal schedules the cell 1 and the cell 2, the active BWPs of the cell 1 and the cell 2 are the BWP 1 and the BWP 2 respectively, and then the size of the at least one of fields in the first DCI is determined based on cell 1 active BWP 1 and cell 2 active BWP 2;
(2) the terminal determines the size of the at least one of fields in the first DCI based on the target cell combination and the target BWP combination; and
(3) the terminal determines the size of the at least one of fields in the first DCI based on the target cell combination and a BWP in the target BWP combination.

Optionally, for the mode (1), when the terminal determines the size of the at least one of fields in the first DCI based on the target cell combination and an active BWP or an active BWP combination, the method further includes:
the terminal determines a meaning of the at least one of fields or indicated information of the at least one of fields based on the target BWP combination or a BWP in the target BWP combination.

For example, a particular field has 6 bits, but part of bits in the field need to be interpreted according to the combination, and the part of bits provide effective information. Illustratively, the terminal determines that a frequency field resource assignment (Frequency Domain Resource Assignment, FDRA) field has 13 bits according to the currently active BWP, but determines that the FDRA should have 12 bits according to the target BWP. In this case, although the FDRA in the first DCI is 13 bits, a specific frequency field resource may be determined merely through 12 bits. In this way, it can be clear that the terminal can determine the meaning of the at least one of fields in the first DCI according to a BWP in the BWP combination or the target BWP combination.

Optionally, the method further includes:
when a first size of the at least one of fields determined by the terminal is different from a second size of the at least one of fields, truncation or zero padding is performed on the at least one of fields to cause the size of the at least one of fields to be equal to the second size. The first size is determined based on the target BWP combination or a BWP in the target BWP combination, and the second size is determined based on the active BWP or the active BWP combination.

For example, the size of the at least one of fields determined by the terminal based on the target BWP combination or a BWP in the target BWP combination is Abit, and the size of the at least one of fields determined based on the active BWP or the active BWP combination is Bbit, and A is not equal to B. Then, the terminal may perform the truncation or the zero padding on the at least one of fields to cause the size of the at least one of fields to be equal to B. Illustratively, the terminal determines that the FDRA should have 12 bits according to the target BWP, but determines that the FDRA has 13 bits according to the currently active BWP. In this case, after determining the specific content of 12 bits according to the target BWP, one bit is added to the 12 bits to make the FDRA in the first DCI have 13 bits.

In the embodiment of the present disclosure, the method may further include:
the terminal acquires a target parameter configuration. The target parameter configuration corresponds to the target BWP combination.

For example, each of the first BWP combinations may have a corresponding target parameter configuration. Illustratively, for some jointly encoded fields, such as type 1B information or information fields through table lookup or index indication, such as a rate matching indicator (rate matching indicator), a rate matching table (rate matching table) or parameters should be configured for any BWP combination and then the size of the field in the first DCI triggering BWP change can be determined. An objective of such action is that no matter what the active BWP combination is, there is a corresponding table, such that the field size can be determined.

Optionally, the method further may further include:
when the terminal receives a plurality of pieces of first DCI within an X time unit (for example, a slot, a symbol, a span, and a monitoring occasion (monitoring occasion, MO)), or the terminal receives a plurality of pieces of first DCI from an overlap part of a plurality of search spaces for which the first DCI is configured, at least one of pieces of first DCI of the plurality of pieces of first DCI satisfy at least one of the following:
the size of the DCI is identical;
a quantity of the first DCI indicating or triggering a BWP change is less than or equal to M, and M is a positive integer;
a quantity of the first DCI carrying a BWP indicator is less than or equal to L, and L is a positive integer;
the at least one of pieces of first DCI correspond to different cells;
the at least one of pieces of first DCI correspond to different cell combinations;
the at least one of pieces of first DCI correspond to different carriers; and
the at least one of pieces of first DCI correspond to different carrier combinations; where
X is a positive integer, for example X=1.

In other words, the terminal does not expect that a. these pieces of first DCI (that is, the at least one of pieces of first DCI of the plurality of pieces of first DCI) vary in size; b. the quantity of the first DCI, triggering the BWP change, of these pieces of first DCI exceeds M; c. the quantity of the first DCI, carrying the BWP indicator, of these pieces of first DCI exceeds L; or d. these pieces of first DCI correspond to an identical cell or cell combination or carrier or carrier combination.

With reference to FIG. 3, FIG. 3 is a flowchart of a method for sending DCI according to an embodiment of the present disclosure. The method is applied to a network side device. As shown in FIG. 3, the method includes:

Step 301: The network side device sends first DCI to a terminal. The first DCI is DCI that can be used to schedule a plurality of cells or a plurality of carriers, a first DCI size or a size of a field in the first DCI is determined based on a target cell combination and a target BWP combination, and the BWP combination includes a BWP or BWPs corresponding to one or more cells.

It should be noted that the network side device sends the first DCI that may schedule the plurality of cells or the plurality of carriers to the terminal, and the first DCI size and/or the size of the field in the first DCI may be determined by the terminal based on the target cell combination and the target BWP combination. Reference can be made to the description in the terminal side device embodiment specifically for an implementation process of how the terminal determines the first DCI size and/or the size of the field in the first DCI, which will not be repeated herein.

In the embodiment of the present disclosure, it is made clear that the first DCI size and/or the size of the field in the first DCI can be determined based on the target cell combination and the target BWP combination. Then, the terminal can perform the blind detection on the DCI based on the determined first DCI size and/or the size of the field in the first DCI. Thus, complexity of the blind detection of the first DCI can be effectively reduced in a multi-cell scheduling scenario, and the overheads of the terminal are reduced.

Optionally, when the first DCI satisfies a first condition, a size of the first DCI is the first DCI size; and
the first condition includes any one of the following:
the first DCI indicates a BWP;
the first DCI indicates or triggers a BWP change; and
the first DCI triggers a change from a currently active BWP to another BWP.

Optionally, the first DCI is further used for indicating or triggering a BWP change, and the BWP change indicated or triggered by the first DCI satisfies at least one of the following:
a change between BWP combinations that can be indicated by a BWP indicator;
a change between BWP combinations corresponding to multi-cell scheduling;
a change between BWP combinations corresponding to the first DCI;
a change between the first BWP combinations corresponding to a BWP indicator (BWP indicator);
a change between the first BWP combinations corresponding to the multi-cell scheduling; and
a change between the first BWP combinations corresponding to the first DCI.

The first BWP combination includes any one of the following:
a BWP combination indicated by the BWP indicator;
a BWP combination that can be indicated by the BWP indicator;
a combination of any BWP of a first cell; and
a combination of a specific BWP of the first cell; and
the first cell includes any one of the following: at least one of cells in a cell set, at least one of cells in a cell combination, and at least one of cells configured for the terminal.

Optionally, when the first DCI indicates or triggers the BWP change, the first DCI satisfies any one of the following:
(a) a change between two first objects is indicated or triggered. The first object is any one of the following:
   the BWP combination that can be indicated by the BWP indicator, the BWP combination corresponding to the multi-cell scheduling, the BWP combination corresponding to the first DCI, a first BWP combination that can be indicated by the BWP indicator, the first BWP combination corresponding to the multi-cell scheduling, and the first BWP corresponding to the first DCI;
(b) a change between the first object and a BWP other than the first object is not indicated or triggered. The first object is any one of the first BWP combination that can be indicated by the BWP indicator, the first BWP combination corresponding to the multi-cell scheduling, and the first BWP combination corresponding to the first DCI;
(c) a BWP change between the part of cells cannot be merely indicated or triggered; and
(d) a BWP change between all cells is merely indicated or triggered. All the cells are all cells in the cell combination (cell combination) scheduled or all cells in the cell set (cell set).

Optionally, the first DCI is further used for any one of the following:
a BWP change is not triggered;
a BWP change between all cells is indicated or triggered. All the cells are all cells in the cell combination (cell combination) scheduled or all cells in the cell set (cell set); and
an indicated or corresponding BWP is identical to a currently active BWP.

Optionally, the BWP change indicated or triggered satisfies:
a BWP indicated by the first DCI is at least partially different from a currently active BWP of a third cell, and the third cell is at least one of cells corresponding to or indicated by the first DCI.

In the embodiment of the present disclosure, the network side device sends the first DCI to the terminal, and the first DCI size is determined based on the target cell combination and the target BWP combination. Then, the terminal can perform the blind detection on the DCI based on the determined first DCI size. Thus, complexity of the blind detection of the first DCI can be effectively reduced in a multi-cell scheduling scenario, and overheads of the terminal are reduced.

It should be noted that the embodiment of the present disclosure is a method applied to the network side device corresponding to the terminal side embodiment. Reference can be made to the description in the terminal side embodiment specifically for the related concepts and implementation processes involved in the embodiment of the present disclosure, which will not be repeated herein for avoiding repetition.

A performing subject of the method for determining a size of DCI according to the embodiment of the present disclosure may be an apparatus for determining a size of DCI. In the embodiment of the present disclosure, the apparatus for determining a size of DCI according to the embodiment of the present disclosure is described with the apparatus for determining a size of DCI performing the method for determining a size of DCI as an example.

With reference to FIG. 4, FIG. 4 is a structural diagram of the apparatus for determining a size of DCI according to the embodiment of the present disclosure. As shown in FIG. 4, the apparatus 400 for determining a size of DCI includes:
a determining module 401 configured to determine a target size based on a target cell combination and a target bandwidth part (BWP) combination, where the target size includes at least one first size, and the first size includes at least one of the following: a first DCI size and a size of a field in first DCI; and
the first DCI is DCI that can be used to schedule a plurality of cells or a plurality of carriers, the target BWP combination includes at least one BWP combination, and the BWP combination includes a BWP or BWPs corresponding to one or more cells.

Optionally, the determining module 401 is further configured to perform at least one of the following:
determine the target size based on all cell combination and a first target BWP combination, where the target BWP combination includes the first target BWP combination; and
determine the target size based on the target BWP combination and the target cell combination when in a first state. The target cell combination is a cell combination including merely an active cell or a non-dormant cell, or the target cell combination includes all the cell combination. The first state is that multi-cell scheduling is configured for the apparatus, at least one cell is deactivated or dormant, or an active BWP of at least one cell is a dormant BWP; or the first state is that a plurality of cells of the terminal or BWPs of the plurality of cells can be scheduled by multi-cell scheduling, at least one cell is deactivated or dormant, or an active BWP of at least one cell is a dormant BWP.

Optionally, the first target BWP combination includes an active BWP combination or a first BWP combination, and the first BWP combination includes at least one of the following:
a BWP combination indicated by a BWP indicator;
the BWP combination that can be indicated by the BWP indicator;
a combination of any BWP of a first cell; and
a combination of a specific BWP of the first cell; and
the first cell includes any one of the following: at least one of cells in a cell set, at least one of cells in a cell combination, and at least one of cells configured for the terminal.

Optionally, when the first target BWP combination includes the active BWP combination, the determining module 401 is further configured to perform at least one of the following:
determine the first size corresponding to each cell combination based on an active BWP of all the cell combination, and determine that one of first sizes is the target size; and
acquire a first combination based on the active BWP of all the cell combination, and determine N target sizes based on the first combination, where N is a positive integer.

Optionally, when the first target BWP combination includes the first BWP combination, the determining module 401 is further configured to:
determine the first size corresponding to each cell combination based on the first BWP combination of all the cell combination, and determine that one of first sizes is the target size.

Optionally, in a case of the first state, the determining module 401 is further configured to perform at least one of the following:
determine the target size based on the cell combination including merely the active cell or the non-dormant cell, and the active BWP combination;
determine the target size based on the cell combination including merely the active cell or the non-dormant cell, and the first BWP combination;
determine the target size based on all the cell combination, and the first BWP combination;
determine the target size based on all the cell combination, and a second BWP combination; and
determine the target size based on all the cell combination, a cell combination composed of an active cell or a non-dormant cell in a cell combination including a first target cell, and a third BWP combination, where the first target cell is a dormant cell or a deactivated cell.

Optionally, the second BWP combination includes any one of the following:
the first BWP combination;
a BWP combination where a first BWP belongs; and
a BWP combination other than the BWP combination where the first BWP belongs.

The first BWP is a BWP corresponding to a deactivated cell, and the first BWP includes at least one of the following: an initial BWP, a default BWP, a dormant BWP, a first active BWP, a first BWP within active time, and a first BWP outside the active time.

Optionally, when the cell combination includes the active cell or the non-dormant cell, or the cell combination includes merely the active cell or the non-dormant cell, the second BWP combination is the active BWP combination.

Optionally, when the determining module 401 determines the target size based on all the cell combination and the second BWP combination, the cell combination and the second BWP combination satisfy at least one of the following:
when the cell combination is a cell combination including the dormant cell or the deactivated cell, the second BWP combination includes any one of the following: a combination of a specific BWP, a BWP combination where a second BWP belongs, a BWP combination other than the second BWP combination, and a BWP combination other than the BWP combination where the second BWP belongs; and
when the cell combination is the cell combination including merely the active cell or the non-dormant cell, the second BWP combination is the first BWP combination; where
the second BWP includes at least one of the following: an initial BWP, a default BWP, a dormant BWP, a first active BWP, a first BWP within active time, and a first BWP outside the active time.

Optionally, when the determining module 401 determines the target size based on all the cell combination, a cell combination composed of an active cell or a non-dormant cell in a cell combination including a first target cell, and a third BWP combination, the cell combination and the third BWP combination satisfy at least one of the following:
when the cell combination is a cell combination including the dormant cell or the deactivated cell, the third BWP combination is a combination of a specific BWP or a BWP combination other than a BWP combination where a third BWP belongs;
when the cell combination is the cell combination including merely the active cell or the non-dormant cell, the third BWP combination is the first BWP combination; where
the third BWP includes any one of the following: an initial BWP, a default BWP, a dormant BWP, a first active BWP, a first BWP within active time, and a first BWP outside the active time.

Optionally, the active BWP combination is composed based on an active BWP corresponding to a second cell; and
the second cell includes any one of the following: the at least one of cells in the cell set, the at least one of cells in the cell combination, and the at least one of cells configured for the terminal.

Optionally, the apparatus further includes:
a blind detection module configured to receive or perform blind detection on the first DCI.

Optionally, the blind detection module is further configured to:
receive or perform the blind detection on the first DCI based on the target size when the first DCI indicates the BWP, or the first DCI indicates or triggers a BWP change, or the first DCI triggers a change from a currently active BWP to another BWP.

Optionally, the BWP change indicated or triggered by the first DCI is at least one of the following:
a change between BWP combinations that can be indicated by a BWP indicator;
a change between BWP combinations corresponding to multi-cell scheduling;
a change between BWP combinations corresponding to the first DCI;
a change between the first BWP combinations corresponding to the BWP indicator;
a change between the first BWP combinations corresponding to the multi-cell scheduling; and
a change between the first BWP combinations corresponding to the first DCI.

Optionally, when the first DCI indicates or triggers the BWP change, the apparatus is further configured to perform any one of the following:
not expect that the first DCI indicates or triggers a change between a first object and a BWP other than the first object, where the first object is any one of the following:
the BWP combination that can be indicated by the BWP indicator, a BWP combination corresponding to the multi-cell scheduling, a BWP combination corresponding to the first DCI, a first BWP combination that can be indicated by the BWP indicator, a first BWP combination corresponding to the multi-cell scheduling, and a first BWP corresponding to the first DCI;
not expect that the first DCI or the BWP indicator merely indicates or triggers a BWP change between the part of cells; and
not expect that the first DCI or the BWP indicator is incapable of indicating or triggering the BWP change between the part of cells.

Optionally, the first DCI satisfies any one of the following: a BWP change is not indicated or triggered, a BWP change between all cells is indicated or triggered, and an indicated or corresponding BWP is identical to a currently active BWP; and/or
the BWP indicator satisfies any one of the following: a BWP change is not indicated or triggered, a BWP change between all cells is indicated or triggered, and an indicated or corresponding BWP is identical to a currently active BWP.

Optionally, a BWP indicated by the first DCI is at least partially different from a currently active BWP of a third cell, and the third cell is at least one of cells corresponding to or indicated by the first DCI.

Optionally, when the first size includes the size of the field in the first DCI, and the size of the field in the first DCI is sizes of at least one of fields, the determining module 401 is further configured to perform any one of the following:
determine the size of the at least one of fields in the first DCI based on the target cell combination and an active BWP or an active BWP combination;
determine the size of the at least one of fields in the first DCI based on the target cell combination and the target BWP combination; and
determine the size of the at least one of fields in the first DCI based on the target cell combination and a BWP in the target BWP combination.

Optionally, the determining module 401 is further configured to:
determine a meaning of the at least one of fields or indicated information of the at least one of fields based on the target BWP combination or a BWP in the target BWP combination.

Optionally, the apparatus further includes a processing module. The processing module is configured to:
perform, when a first size of the at least one of fields determined is different from a second size of the at least one of fields, truncation or zero padding on the at least one of fields to cause the size of the at least one of fields to be equal to the second size.

The first size is determined based on the target BWP combination or a BWP in the target BWP combination, and the second size is determined based on the active BWP or the active BWP combination.

Optionally, the apparatus further includes:
an acquiring module configured to acquire a target parameter configuration, where the target parameter configuration corresponds to the target BWP combination.

Optionally, when the apparatus receives a plurality of pieces of first DCI within an X time unit, or the apparatus receives a plurality of pieces of first DCI from an overlap part of a plurality of search spaces for which the first DCI is configured, at least one of pieces of first DCI of the plurality of pieces of first DCI satisfy at least one of the following:
the size of the DCI is identical;
a quantity of the first DCI indicating or triggering a BWP change is less than or equal to M, and M is a positive integer;
a quantity of the first DCI carrying a BWP indicator is less than or equal to L, and L is a positive integer;
the at least one of pieces of first DCI correspond to different cells;
the at least one of pieces of first DCI correspond to different cell combinations;
the at least one of pieces of first DCI correspond to different carriers; and
the at least one of pieces of first DCI correspond to different carrier combinations; where
X is a positive integer.

In the embodiment of the present disclosure, the apparatus can determine, based on the target cell combination and the target BWP combination, the first DCI size and/or the size of the field in the first DCI that can be used for scheduling the plurality of cells or the plurality of carriers. Then, the apparatus can perform the blind detection on the DCI based on the determined first DCI size and/or the size of the field in the first DCI. Thus, complexity of the blind detection of the first DCI by the apparatus can be effectively reduced in a multi-cell scheduling scenario, and overheads of the apparatus are reduced.

The apparatus 400 for determining a size of DCI in the embodiment of the present disclosure may be an electronic device, such as an electronic device having an operating system, or a component in the electronic device, such as an integrated circuit or a chip. The electronic device may be a terminal or another device except the terminal. Illustratively, the terminal may include, but is not limited to, the types of the terminal 11 listed above, and another device may be a server, a network attached storage (Network Attached Storage, NAS), etc., which is not specifically limited in the embodiment of the present disclosure.

The apparatus 400 for determining a size of DCI according to the embodiment of the present disclosure can implement the processes implemented by the terminal in the method embodiment of FIG. 2, and achieve the same technical effect, which will not be repeated herein for avoiding repetition.

A performing subject of the method for sending DCI according to the embodiment of the present disclosure may be an apparatus for sending DCI. In the embodiment of the disclosure, the apparatus for sending DCI according to the embodiment of the disclosure is described with the apparatus for sending DCI executing the method for sending DCI as an example.

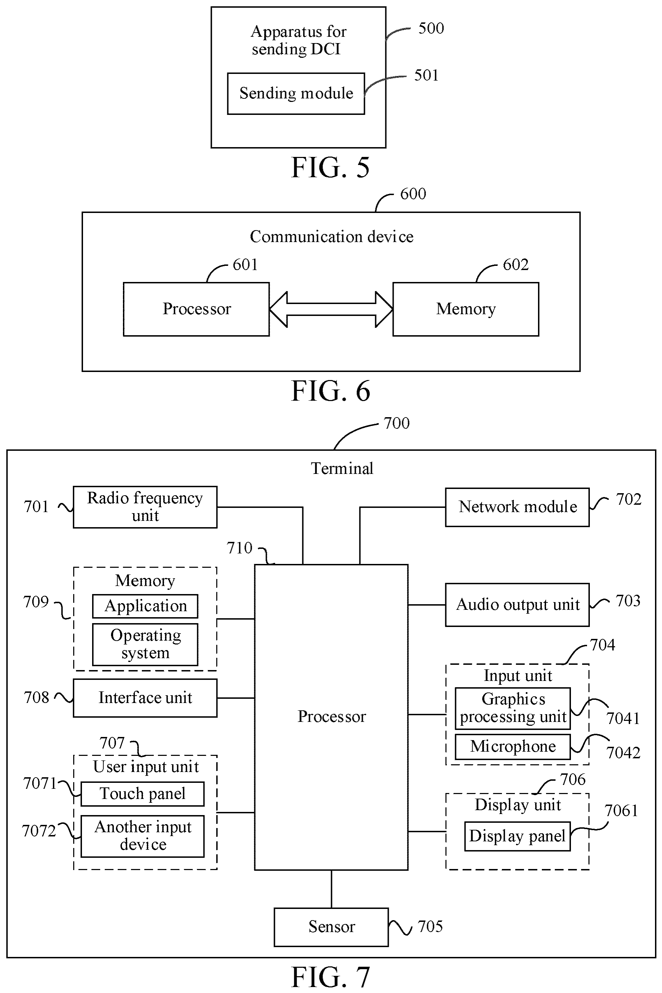

With reference to FIG. 5, FIG. 5 is a structural diagram of the apparatus for sending DCI according to the embodiment of the present disclosure. As shown in FIG. 5, the apparatus 500 for sending DCI includes:
a sending module 501 configured to send first DCI to a terminal; where
the first DCI is DCI that can be used to schedule a plurality of cells or a plurality of carriers, a first DCI size or a size of a field in the first DCI is determined based on a target cell combination and a target BWP combination, and the BWP combination includes a BWP or BWPs corresponding to one or more cells.

Optionally, when the first DCI satisfies a first condition, a size of the first DCI is the first DCI size; and
the first condition includes any one of the following:
the first DCI indicates a BWP;
the first DCI indicates or triggers a BWP change; and
the first DCI triggers a change from a currently active BWP to another BWP.

Optionally, the first DCI is further used for indicating or triggering a BWP change, and the BWP change indicated or triggered by the first DCI satisfies at least one of the following:
a change between BWP combinations that can be indicated by a BWP indicator;
a change between BWP combinations corresponding to multi-cell scheduling;
a change between BWP combinations corresponding to the first DCI;
a change between the first BWP combinations corresponding to the BWP indicator;
a change between the first BWP combinations corresponding to the multi-cell scheduling; and
a change between the first BWP combinations corresponding to the first DCI.

The first BWP combination includes any one of the following:
a BWP combination indicated by the BWP indicator;
the BWP combination that can be indicated by the BWP indicator;
a combination of any BWP of a first cell; and
a combination of a specific BWP of the first cell; and
the first cell includes any one of the following: at least one of cells in a cell set, at least one of cells in a cell combination, and at least one of cells configured for the terminal.

Optionally, when the first DCI indicates or triggers the BWP change, the first DCI satisfies any one of the following:
a change between two first objects is indicated or triggered;
a change between the first object and a BWP other than the first object is not indicated or triggered;
a BWP change between the part of cells cannot be merely indicated or triggered; and
a BWP change between all cells is merely indicated or triggered.

The first object is any one of the following:
the BWP combination that can be indicated by the BWP indicator, the BWP combination corresponding to the multi-cell scheduling, the BWP combination corresponding to the first DCI, a first BWP combination that can be indicated by the BWP indicator, the first BWP combination corresponding to the multi-cell scheduling, and the first BWP corresponding to the first DCI.

Optionally, the first DCI is further used for any one of the following:
a BWP change is not triggered;
a BWP change between all cells is indicated or triggered; and
an indicated or corresponding BWP is identical to a currently active BWP.

Optionally, the BWP change indicated or triggered satisfies:
a BWP indicated by the first DCI is at least partially different from a currently active BWP of a third cell, and the third cell is at least one of cells corresponding to or indicated by the first DCI.

The apparatus 500 for sending DCI according to the embodiment of the present disclosure can implement processes implemented by the network side device in the method embodiment of FIG. 3, and achieve the same technical effect, which will not be repeated herein for avoiding repetition.

Optionally, as shown in FIG. 6, the embodiment of the present disclosure further provides a communication device 600. The communication apparatus includes a processor 601 and a memory 602, and the memory 602 stores a program or an instruction that is runnable on the processor 601. For example, when the communication device 600 is a terminal, the program or the instruction implements steps of the embodiment of the method for determining a size of DCI when executed by the processor 601, and can achieve the same technical effect. When the communication device 600 is a network side device, the program or the instruction implements steps of the embodiment of the method for sending DCI when executed by the processor 601, and can achieve the same technical effect, which will not be repeated herein for avoiding repetition.

The embodiment of the present disclosure further provides a terminal. The terminal includes a processor and a communication interface, where the processor is configured to determine a target size based on a target cell combination and a target bandwidth part (BWP) combination. The target size includes at least one first size, and the first size includes at least one of the following: a first DCI size and a size of a field in the first DCI. The first DCI is DCI that can be used to schedule a plurality of cells or a plurality of carriers, the target BWP combination includes at least one BWP combination, and the BWP combination includes a BWP or BWPs corresponding to one or more cells. The embodiment of the terminal corresponds to the embodiment of the terminal side method, and the implementation processes and implementation modes of the method embodiment may be applied to the embodiment of the terminal, and can achieve the same technical effect. Specifically, FIG. 7 is a schematic diagram of a hardware structure of the terminal for implementing the embodiment of the present disclosure.

The terminal 700 includes, but is not limited to, at least some components such as a radio frequency unit 701, a network module 702, an audio output unit 703, an input unit 704, a sensor 705, a display unit 706, a user input unit 707, an interface unit 708, a memory 709, and a processor 710.

It can be understood by those skilled in the art that the terminal 700 may further include a power supply (such as a battery) for energizing the components, and the power supply may be logically connected to the processor 710 through a power management system, such that the functions of charging, discharging and power consumption management may be implemented through the power management system. The terminal structure shown in FIG. 7 does not constitute limitation to the terminal, and the terminal may include more or less components than those shown, or combine some components, or arrange components in different ways, which will not be repeated herein.

It should be understood that in the embodiment of the present disclosure, the input unit 704 may include a graphics processing unit (Graphics Processing Unit, GPU) 7041 and a microphone 7042, and the graphics processing unit 7041 processes image data of static pictures or videos acquired by an image capture device (such as a camera) in a video capture mode or an image capture mode. The display unit 706 may include a display panel 7061, and the display panel 7061 may be configured in the form of a liquid crystal display or an organic light-emitting diode. The user input unit 707 includes at least one of a touch panel 7071 and another input device 7072. The touch panel 7071 is also referred to as a touch screen. The touch panel 7071 may include a touch detection device and a touch controller. Another input device 7072 may include, but is not limited to, a physical keyboard, a function key (such as a volume control button and a switch button), a trackball, a mouse, and a joystick, which will not be repeated herein.

In this embodiment, after receiving downlink data from the network side device, the radio frequency unit 701 may transmit the data to the processor 710 for processing. In addition, the radio frequency unit 701 may send uplink data to the network side device. Generally, the radio frequency unit 701 includes, but is not limited to, an antenna, an amplifier, a transceiver, a coupler, a low noise amplifier, and a duplexer.

The memory 709 may be configured to store the software program or instruction and various data. The memory 709 may mainly include a first storage area for storing the program or instruction and a second storage area for storing the data. The first storage area may store an operating system, an application program or instruction required for at least one function (for example, a sound playback function, and an image display function), etc. Further, the memory 709 may include a volatile memory or a nonvolatile memory, or the memory 709 may include the volatile memory and the nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 709 in embodiments of the present disclosure includes, but is not limited to, these and any other suitable types of memory.

The processor 710 may include one or more processing units. Optionally, the processor 710 integrates an application processor and a modem processor. The application processor mainly processes an operating system, a user interface, an application program, etc., and the modem processor mainly processes a wireless communication signal, such as a baseband processor. It can be understood that the above modem processor may not be integrated into the processor 710.

The processor 710 is configured to determine a target size based on a target cell combination and a target bandwidth part (BWP) combination. The target size includes at least one first size, and the first size includes at least one of the following: a first DCI size and a size of a field in the first DCI. The first DCI is DCI that can be used to schedule a plurality of cells or a plurality of carriers, the target BWP combination includes at least one BWP combination, and the BWP combination includes a BWP or BWPs corresponding to one or more cells.

In the embodiment of the present disclosure, the terminal determines, based on the target cell combination and the target BWP combination, the first DCI size that can be used for scheduling the plurality of cells or the plurality of carriers. Then, the terminal can perform the blind detection on the DCI based on the determined first DCI size. Thus, complexity of the blind detection of the first DCI can be effectively reduced in a multi-cell scheduling scenario, and overheads of the terminal are reduced.

It should be noted that the terminal according to the embodiment of the present disclosure can implement various processes of the method embodiment of FIG. 2, and achieve the same technical effect, which will not be repeated herein for avoiding repetition.

The embodiment of the present disclosure further provides a network side device. The network side device includes a processor and a communication interface. The communication interface is configured to send first DCI to a terminal. The first DCI is DCI that can be used to schedule a plurality of cells or a plurality of carriers, a first DCI size is determined based on a target cell combination and a target BWP combination, and the BWP combination includes a BWP or BWPs corresponding to one or more cells. The embodiment of the network side device corresponds to the embodiment of the network side device method, and the implementation processes and implementation modes of the method embodiment may be applied to the embodiment of the network side device, and can achieve the same technical effect.

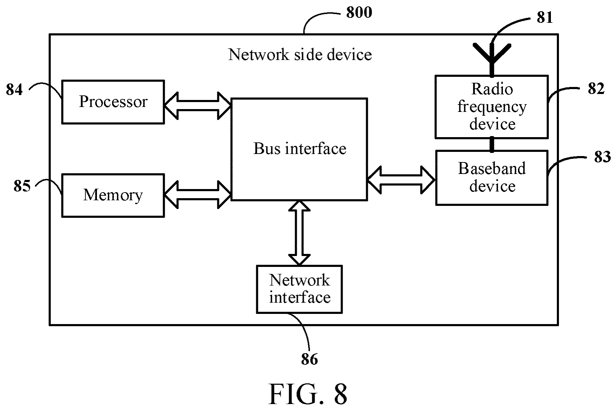

Specifically, the embodiments of the present disclosure further provide a network side device. As shown in FIG. 8, the network side device 800 includes an antenna 81, a radio frequency device 82, a baseband device 83, a processor 84, and a memory 85. The antenna 81 is connected to the radio frequency device 82. In an uplink direction, the radio frequency device 82 receives information through the antenna 81 and sends the received information to the baseband device 83 for processing. In a downlink direction, the baseband device 83 processes the information to be sent and sends the information to the radio frequency device 82, and the radio frequency device 82 processes the received information and sends the information through the antenna 81.

The method performed by the network side device in the embodiment may be implemented in the baseband device 83, and the baseband device 83 includes a baseband processor.

For example, the baseband device 83 may include at least one baseband board, and a plurality of chips are arranged on the baseband board, as shown in FIG. 8. One chip is the baseband processor for example, and is connected to the memory 85 through a bus interface, so as to invoke a program in the memory 85 and perform the network device operation shown in the method embodiment.

The network side device may further include a network interface 86. The network interface is, for example, a common public radio interface (common public radio interface, CPRI).

Specifically, the network side device 800 of the embodiment of the present disclosure further includes an instruction or a program that is stored on the memory 85 and executable on the processor 84. The processor 84 invokes the instruction or the program from the memory 85 to perform the methods executed by the modules shown in FIG. 5, and achieves the same technical effect, which will not be repeated herein for avoiding repetition.

The embodiment of the present disclosure further provides a readable storage medium. The readable storage medium stores a program or an instruction. When executed by a processor, the program or the instruction implements the processes of the method embodiment shown in FIG. 2 or the processes of the method embodiment shown in FIG. 3, and can achieve the same technical effect, which will not be repeated herein for avoiding repetition

The processor is a processor in a terminal described in the embodiment. The readable storage medium includes a computer-readable storage medium, such as a computer read-only memory (ROM), a random access memory (RAM), a magnetic disk, and an optical disk.

The embodiment of the present disclosure further provides a chip. The chip includes: a processor and a communication interface. The communication interface is coupled to the processor, and the processor is configured to run a program or an instruction to implement the processes of the method embodiment shown in FIG. 2 or the processes of the method embodiment shown in FIG. 3, and can achieve the same technical effect, which will not be repeated herein for avoiding repetition

It should be understood that the chip in the embodiment of the present disclosure may be referred to as a system on chip, a system chip, a chip system, an on-chip system chip, etc.

The embodiment of the present disclosure further provides a computer program/program product. The computer program/program product is stored in a storage medium, and the computer program/program product is executed by at least one processor to implement the processes of the method embodiment shown in FIG. 2 or the processes of the method embodiment shown in FIG. 3, and can achieve the same technical effect, which will not be repeated herein for avoiding repetition.

The embodiment of the present disclosure further provides a communication system. The communication system includes a terminal and a network side device, where the terminal is configured to perform steps of the method shown in FIG.2, and the network side device is configured to perform steps of the method shown in FIG.3.

It should be noted that in this context, the terms "comprise", "include", or their any other variation is intended to cover non-exclusive inclusion, such that a process, a method, an article or an apparatus including a series of elements include those elements, and further includes other elements not listed clearly, or further include elements inherent to such a process, method, article or apparatus. In a case of no more limitation, an element limited with the phrase "comprise a..."or "include a..." does not exclude other same elements existing in the process, method, article or apparatus including the element. In addition, it should be pointed out that the range of the method and apparatus in the implementation of the present disclosure is not limited to implementation of functions in order shown or discussed, and can further include implementation of functions involved in a substantially simultaneous manner or in reverse order. For example, the method described can be performed in order different from that described, and various steps can be added, omitted, or combined. In addition, features described with reference to some examples can be combined in other examples.

It can be clearly understood by those skilled in the art from the description of the implementation that the method embodiment can be implemented through software and necessary general hardware platforms, and may alternatively be implemented through the hardware certainly, of which the former is a preferred implementation in many cases. Based on such understanding, the technical solution in essence of the present disclosure or the part that contributes to the prior art may be embodied in the form of computer software products. The computer software products are stored in the storage medium (such as an ROM/RAM, a diskette, and an optical disk), and include several instructions to make a terminal (which may be a mobile phone, a computer, a server, an air conditioner, a network device, etc.) perform the method of the embodiments of the present disclosure.

The embodiments of the present disclosure have been described above with reference to the accompanying drawings, but the present disclosure is not limited to the above particular implementation, which are merely illustrative rather than restrictive. Under the inspiration of the present disclosure, those skilled in the art can make many forms without departing from the purposes of the present disclosure and the protection scope of the claims, which should fall within protection of the present disclosure.

## Claims

1. A method for determining a size of downlink control information (DCI), comprising:
determining, by a terminal, a target size based on a target cell combination and a target bandwidth part (BWP) combination, wherein the target size comprises at least one first size, and the first size comprises at least one of the following: a first DCI size and a size of a field in first DCI; and
the first DCI is DCI that can be used to schedule a plurality of cells or a plurality of carriers, the target BWP combination comprises at least one BWP combination, and the BWP combination comprises a BWP or BWPs corresponding to one or more cells.

2. The method according to claim 1, wherein the determining, by a terminal, a target size based on a target cell combination and a target BWP combination comprises at least one of the following:
determining, by the terminal, the target size based on all cell combination and a first target BWP combination, wherein the target BWP combination comprises the first target BWP combination; and
determining, by the terminal, the target size based on the target BWP combination and the target cell combination when in a first state, wherein the target cell combination is a cell combination comprising merely an active cell or a non-dormant cell, or the target cell combination comprises all the cell combination; the first state is that multi-cell scheduling is configured for the terminal, at least one cell is deactivated or dormant, or an active BWP of at least one cell is a dormant BWP; or the first state is that a plurality of cells of the terminal or BWPs of the plurality of cells can be scheduled by multi-cell scheduling, wherein at least one cell is deactivated or dormant, or an active BWP of at least one cell is a dormant BWP.

3. The method according to claim 2, wherein the first target BWP combination comprises an active BWP combination or a first BWP combination, and the first BWP combination comprises at least one of the following:
a BWP combination indicated by a BWP indicator;
a BWP combination that can be indicated by the BWP indicator;
a combination of any BWP of a first cell; and
a combination of a specific BWP of the first cell; and
the first cell comprises any one of the following: at least one of cells in a cell set, at least one of cells in the cell combination, and at least one of cells configured for the terminal.

4. The method according to claim 3, wherein when the first target BWP combination comprises the active BWP combination, the determining, by the terminal, the target size based on all cell combination and a first target BWP combination comprises at least one of the following:
determining the first size corresponding to each cell combination based on an active BWP of all the cell combination, and determines that one of first sizes is the target size by the terminal; and
acquiring a first combination based on all the cell combination and the active BWPs, and determining N target sizes based on the first combination by the terminal, wherein N is a positive integer.

5. The method according to claim 3, wherein when the first target BWP combination comprises the first BWP combination, the determining, by the terminal, the target size based on all cell combination and a first target BWP combination comprises:
determining the first size corresponding to each cell combination based on the first BWP combination of all the cell combination, and determining that one of first sizes is the target size by the terminal.

6. The method according to claim 3, wherein the determining, by the terminal, the target size based on the target BWP combination and the target cell combination when the terminal is in a first state comprises at least one of the following:
determining, by the terminal, the target size based on the cell combination comprising merely the active cell or the non-dormant cell, and the active BWP combination;
determining, by the terminal, the target size based on the cell combination comprising merely the active cell or the non-dormant cell, and the first BWP combination;
determining, by the terminal, the target size based on all the cell combination, and the first BWP combination;
determining, by the terminal, the target size based on all the cell combination, and a second BWP combination; and
determining, by the terminal, the target size based on all the cell combination, a cell combination composed of an active cell or a non-dormant cell in a cell combination comprising a first target cell, and a third BWP combination, wherein the first target cell is a dormant cell or a deactivated cell.

7. The method according to claim 6, wherein the second BWP combination comprises at least one of the following:
the first BWP combination;
a BWP combination where a first BWP belongs; and
a BWP combination other than the BWP combination where the first BWP belongs; wherein
the first BWP is a BWP corresponding to the deactivated cell or the dormant cell; and
the first BWP comprises at least one of the following: an initial BWP, a default BWP, a dormant BWP, a first active BWP, a first BWP within active time, and a first BWP outside the active time.

8. The method according to claim 6, wherein when the cell combination comprises the active cell or the non-dormant cell, or the cell combination comprises merely the active cell or the non-dormant cell, the second BWP combination is the active BWP combination.

9. The method according to claim 6, wherein in a case of the determining, by the terminal, the target size based on all the cell combination, and a second BWP combination, the cell combination and the second BWP combination satisfy at least one of the following:
when the cell combination is a cell combination comprising the dormant cell or the deactivated cell, the second BWP combination comprises any one of the following: a combination of a specific BWP, a BWP combination where a second BWP belongs, a BWP combination other than the second BWP combination, and a BWP combination other than the BWP combination where the second BWP belongs; and
when the cell combination is the cell combination comprising merely the active cell or the non-dormant cell, the second BWP combination is the first BWP combination; wherein
the second BWP comprises at least one of the following: an initial BWP, a default BWP, a dormant BWP, a first active BWP, a first BWP within active time, and a first BWP outside the active time.

10. The method according to claim 6, wherein in a case of determining, by the terminal, the target size based on all the cell combination, a cell combination composed of an active cell or a non-dormant cell in a cell combination comprising a first target cell, and a third BWP combination, the cell combination and the third BWP combination satisfy at least one of the following:
when the cell combination is a cell combination comprising the dormant cell or the deactivated cell, the third BWP combination is a combination of a specific BWP or a BWP combination other than a BWP combination where a third BWP belongs;
when the cell combination is the cell combination comprising merely the active cell or the non-dormant cell, the third BWP combination is the first BWP combination; wherein
the third BWP comprises any one of the following: an initial BWP, a default BWP, a dormant BWP, a first active BWP, a first BWP within active time, and a first BWP outside the active time.

11. The method according to claim 3, wherein the active BWP combination is composed based on an active BWP corresponding to a second cell; and
the second cell comprises any one of the following: the at least one of cells in the cell set, the at least one of cells in the cell combination, and the at least one of cells configured for the terminal.

12. The method according to claim 3, further comprising:
receiving or performing blind detection, by the terminal, on the first DCI.

13. The method according to claim 12, wherein the receiving or performing blind detection, by the terminal, on the first DCI comprises:
receiving or performing the blind detection, by the terminal, on the first DCI based on the target size when the first DCI indicates a BWP, or the first DCI indicates or triggers a BWP change, or the first DCI triggers a change from a currently active BWP to another BWP.

14. The method according to claim 12, wherein the BWP change indicated or triggered by the first DCI is at least one of the following:
a change between the BWP combinations that can be indicated by the BWP indicator;
a change between BWP combinations corresponding to the multi-cell scheduling;
a change between BWP combinations corresponding to the first DCI;
a change between the first BWP combinations corresponding to the BWP indicator;
a change between the first BWP combinations corresponding to the multi-cell scheduling; and
a change between the first BWP combinations corresponding to the first DCI.

15. The method according to claim 12, wherein when the first DCI indicates or triggers the BWP change, the method further comprises any one of the following:
not expecting, by the terminal, that the first DCI indicates or triggers a change between a first object and a BWP other than the first object, wherein the first object is any one of the following:
the BWP combination that can be indicated by the BWP indicator, a BWP combination corresponding to the multi-cell scheduling, a BWP combination corresponding to the first DCI, a first BWP combination that can be indicated by the BWP indicator, a first BWP combination corresponding to the multi-cell scheduling, and a first BWP corresponding to the first DCI;
not expecting, by the terminal, that the first DCI or the BWP indicator merely indicates or triggers a BWP change between the part of cells; and
not expecting, by the terminal, that the first DCI or the BWP indicator is incapable of indicating or triggering the BWP change between the part of cells.

16. The method according to claim 12, wherein the first DCI satisfies any one of the following: a BWP change is not indicated or triggered, a BWP change between all cells is indicated or triggered, and an indicated or corresponding BWP is identical to a currently active BWP; and/or
the BWP indicator satisfies any one of the following: a BWP change is not indicated or triggered, a BWP change between all cells is indicated or triggered, and an indicated or corresponding BWP is identical to a currently active BWP.

17. The method according to claim 12, wherein a BWP indicated by the first DCI is at least partially different from a currently active BWP of a third cell, and the third cell is at least one of cells corresponding to or indicated by the first DCI.

18. The method according to claim 1, wherein when the first size comprises the size of the field in the first DCI, and the size of the field in the first DCI is sizes of at least one of fields, the determining, by a terminal, a target size based on a target cell combination and a target BWP combination comprises any one of the following:
determining, by the terminal, the size of the at least one of fields in the first DCI based on the target cell combination, and an active BWP or an active BWP combination;
determining, by the terminal, the size of the at least one of fields in the first DCI based on the target cell combination and the target BWP combination; and
determining, by the terminal, the size of the at least one of fields in the first DCI based on the target cell combination and a BWP in the target BWP combination.

19. The method according to claim 18, wherein in a case of the determining, by the terminal, the size of the at least one of fields in the first DCI based on the target cell combination and an active BWP or an active BWP combination, the method further comprises:
determining, by the terminal, a meaning of the at least one of fields or indicated information of the at least one of fields based on the target BWP combination or a BWP in the target BWP combination.

20. The method according to claim 18, further comprising:
performing, when a first size of the at least one of fields determined by the terminal is different from a second size of the at least one of fields, truncation or zero padding on the at least one of fields to cause the size of the at least one of fields to be equal to the second size; wherein
the first size is determined based on the target BWP combination or a BWP in the target BWP combination, and the second size is determined based on the active BWP or the active BWP combination.

21. The method according to claim 1, further comprising:
acquiring, by the terminal, a target parameter configuration, wherein the target parameter configuration corresponds to the target BWP combination.

22. The method according to claim 1, wherein when the terminal receives a plurality of pieces of first DCI within an X time unit, or the terminal receives a plurality of pieces of first DCI from an overlap part of a plurality of search spaces for which the first DCI is configured, at least one of pieces of first DCI of the plurality of pieces of first DCI satisfy at least one of the following:
the size of the DCI is identical;
a quantity of the first DCI indicating or triggering a BWP change is less than or equal to M, and M is a positive integer;
a quantity of the first DCI carrying a BWP indicator is less than or equal to L, and L is a positive integer;
the at least one of pieces of first DCI correspond to different cells;
the at least one of pieces of first DCI correspond to different cell combinations;
the at least one of pieces of first DCI correspond to different carriers; and
the at least one of pieces of first DCI correspond to different carrier combinations; wherein
X is a positive integer.

23. A method for sending DCI, comprising:
sending, by a network side device, first DCI to a terminal; wherein
the first DCI is DCI that can be used to schedule a plurality of cells or a plurality of carriers, a first DCI size or a size of a field in the first DCI is determined based on a target cell combination and a target BWP combination, and the BWP combination comprises a BWP or BWPs corresponding to one or more cells.

24. The method according to claim 23, wherein when the first DCI satisfies a first condition, a size of the first DCI is the first DCI size; and
the first condition comprises any one of the following:
the first DCI indicates a BWP;
the first DCI indicates or triggers a BWP change; and
the first DCI triggers a change from a currently active BWP to another BWP.

25. The method according to claim 23, wherein the first DCI is further used for indicating or triggering a BWP change, and the BWP change indicated or triggered by the first DCI satisfies at least one of the following:
a change between BWP combinations that can be indicated by a BWP indicator;
a change between BWP combinations corresponding to multi-cell scheduling;
a change between BWP combinations corresponding to the first DCI;
a change between the first BWP combinations corresponding to the BWP indicator;
a change between the first BWP combinations corresponding to the multi-cell scheduling; and
a change between the first BWP combinations corresponding to the first DCI; wherein
the first BWP combination comprises any one of the following:
a BWP combination indicated by the BWP indicator;
the BWP combination that can be indicated by the BWP indicator;
a combination of any BWP of a first cell; and
a combination of a specific BWP of the first cell; and
the first cell comprises any one of the following: at least one of cells in a cell set, at least one of cells in a cell combination, and at least one of cells configured for the terminal.

26. The method according to claim 25, wherein when the first DCI indicates or triggers the BWP change, the first DCI satisfies any one of the following:
a change between two first objects is indicated or triggered;
a change between the first object and a BWP other than the first object is not indicated or triggered;
a BWP change between the part of cells cannot be merely indicated or triggered; and
a BWP change between all cells is merely indicated or triggered; wherein
the first object is any one of the following:
the BWP combination that can be indicated by the BWP indicator, the BWP combination corresponding to the multi-cell scheduling, the BWP combination corresponding to the first DCI, a first BWP combination that can be indicated by the BWP indicator, the first BWP combination corresponding to the multi-cell scheduling, and the first BWP corresponding to the first DCI.

27. The method according to claim 23, wherein the first DCI is further used for any one of the following:
a BWP change is not triggered;
a BWP change between all cells is indicated or triggered; and
an indicated or corresponding BWP is identical to a currently active BWP.

28. The method according to claim 27, wherein the indicated or triggered BWP change satisfies:
a BWP indicated by the first DCI is at least partially different from a currently active BWP of a third cell, and the third cell is at least one of cells corresponding to or indicated by the first DCI.

29. An apparatus for determining a size of DCI, comprising:
a determining module configured to determine a target size based on a target cell combination and a target bandwidth part (BWP) combination, wherein the target size comprises at least one first size, and the first size comprises at least one of the following: a first DCI size and a size of a field in first DCI; and
the first DCI is DCI that can be used to schedules a plurality of cells or a plurality of carriers, the target BWP combination comprises at least one BWP combination, and the BWP combination comprises a BWP or BWPs corresponding to one or more cells.

30. An apparatus for sending DCI, comprising:
a sending module configured to send first DCI to a terminal; wherein
the first DCI is DCI that can be used to schedule a plurality of cells or a plurality of carriers, a first DCI size or a size of a field in the first DCI is determined based on a target cell combination and a target BWP combination, and the BWP combination comprises a BWP or BWPs corresponding to one or more cells.

31. A terminal, comprising a processor and a memory, wherein the memory stores a program or an instruction that is runnable on the processor, and the program or the instruction implements steps of the method for determining a size of DCI according to any one of claims 1 to 22 when executed by the processor.

32. A network side device, comprising a processor and a memory, wherein the memory stores a program or an instruction that is runnable on the processor, and the program or the instruction implements steps of the method for sending DCI according to any one of claims 23 to 28 when executed by the processor.

33. A readable storage medium, storing a program or an instruction, wherein the program or the instruction implements steps of the method for determining a size of DCI according to any one of claims 1 to 22, or steps of the method for sending DCI according to any one of claims 23 to 28 when executed by a processor.
